# EUROPÄISCHE PATENTSCHRIFT

(11) **EP 2 425 164 B1**
(45) Veröffentlichungstag und Bekanntmachung des Hinweises auf die Patenterteilung: **14.11.2012**
(21) Anmeldenummer: 10708136.6
(22) Anmeldetag: 10.03.2010
(51) Int. Cl.: F16K 31/06, B66F 9/22, F15B 13/01

(54) **PROPORTIONAL-DROSSELVENTIL**
PROPORTIONAL THROTTLE VALVE
VANNE PAPILLON PROPORTIONNELLE

(30) Priorität: 30.04.2009 DE 102009019552
(43) Veröffentlichungstag der Anmeldung: 07.03.2012
(73) Patentinhaber: Hydac Fluidtechnik GmbH, 66273 Sulzbach/Saar (DE)
(72) Erfinder: BILL, Markus, 66265 Heusweiler (DE); BRUCK, Peter, 66484 Althornbach (DE)
(74) Vertreter: Bartels, Martin Erich Arthur
(86) Internationale Anmeldenummer: PCT/EP2010/001477
(87) Internationale Veröffentlichungsnummer: WO 2010/124763

(56) Entgegenhaltungen:
- US-A- 3 972 345
- US-A- 4 860 788
- US-A- 5 447 174
- US-A- 5 938 170
- US-A1- 2009 072 174

## Beschreibung

Die Erfindung betrifft ein Proportional-Drosselventil mit einem Ventilkolben, der in einem Ventilgehäuse mit Fluideinlaß und Fluidauslaß in Längsrichtung verschiebbar geführt ist und der durch einen Energiespeicher, insbesondere in Form einer Druckfeder, gegen einen die Schließposition definierenden Hubanschlag vorgespannt ist, wobei in dem Proportional-Drosselventil ein Druckbegrenzungsventil integriert ist, mit Hilfe dessen der Fluiddruck auf der Rückseite des Ventilkolbens im Sinne eines gegen die Vorspannung erfolgenden Entfernens vom Hubanschlag bei Überschreiten eines vorgebbaren Druckes am Fluideinlaß beeinflußt ist, wobei auf einen Ventilsitz des Druckbegrenzungsventils ein Fluiddruck am Fluideinlaß des Proportional-Drosselventils wirkt.

Proportional-Drosselventile werden häufig verwendet, wenn die Höhe des diese Ventile passierenden Fluidstromes stufenlos in Abhängigkeit zu einem anliegenden Magnetstrom einer den Ventilkolben ansteuernden Spule verändert werden soll. Im Hinblick auf einen Aufbau als Schieberventil ist der Öffnungsquerschnitt abhängig von der Kolbenposition. Wird die Spule mit einem elektrischen Strom beaufschlagt, bildet sich eine dem Magnetstrom proportionale Magnetkraft aus, wodurch der Ventilkolben in eine Öffnungsposition bewegbar ist. Dabei wird regelmäßig eine auf der Rückseite des Ventilkolbens angeordnete Feder gespannt, deren Federkraft der Magnetkraft entgegenwirkt. Stellt sich ein Gleichgewicht zwischen Magnetkraft und Federkraft ein, verharrt der Ventilkolben in seiner Position.

Das Proportional-Drosselventil ist weitgehend unabhängig von dem zu steuernden Druckniveau, weil der Ventilkolben druckausgeglichen ist, indem der Druck auf beide Stirnflächen sowie in der Vorsteuerkammer vorherrscht.

Proportional-Drosselventile werden beispielsweise bei Hub-Senkanwendungen etwa bei Flurförderfahrzeugen eingesetzt. Zum Absenken der Last bei solchen Einsatzzwecken wird ein 2/2-Wege-Ventil im Rahmen der Hub-Senkbewegung grundsätzlich eingesetzt. Gleichzeitig kommt zur Steuerung des Volumenstromes ein Proportional-Drosselventil zum Einsatz. Zur Absicherung des Gesamtsystems der beiden genannten Ventile wird zusätzlich ein Druckbegrenzungsventil verwendet, um den Maximaldruck zu begrenzen.

Die bekannten Systeme weisen so eine Mehrzahl von Ventilen auf, die entsprechenden Bauraum benötigen.

Durch die US 4 860 788 ist ein Dosierventil im Stand der Technik bekannt. Das Dosierventil kann als hydraulisch betätigtes Ventil ausgebildet sein und die Funktion eines kombinierten Rückschlag- und Saugventils haben. Im Ventilkolben ist dabei eine Kammer vorgesehen, deren wirksame Druckfläche größer ist, als die entgegen gesetzte Querschnittsfläche eines bodenseitigen Fluidanschlusses, mit dem die Kammer durch eine axiale Bohrung des Kolbens verbunden ist. Auf diese Weise ist der Ventilkolben bei anstehendem Fluiddruck in die Schließstellung vorgespannt.
Im Hinblick auf diese Ausgangssituation stellt sich die Erfindung die Aufgabe, ein Proportional-Drosselventil zu schaffen, das mehrere Funktionen betreffend die Hub-Senkbewegung in sich integriert.

Diese Aufgabe wird durch ein Proportional-Drosselventil mit den Merkmalen des Patentanspruches 1 in seiner Gesamtheit gelöst.

Dadurch, dass in dem Proportional-Drosselventil ein Druckbegrenzungsventil integriert ist, mit Hilfe dessen der Fluiddruck auf der Rückseite des Ventilkolbens im Sinne eines Öffnens am zugehörigen Ventilsitz bei Überschreiten eines vorgebbaren Druckes am Fluideinlaß beeinflußbar ist, ist eine Kombination der Funktion des Proportional-Drosselventils mit dem Druckbegrenzungsventil geschaffen, die gegenüber dem Stand der Technik Bauteile und Bauraum einsparen hilft.

Bevorzugte Ausführungen ergeben sich aus den Unteransprüchen.

Das Druckbegrenzungsventil ist zur funktionalen Kopplung der Steuerleitungen mit in den Ventilkolben vorzugsweise integriert.

Die Steuerleitungen bewirken, dass auf einen Ventilsitz, insbesondere ausgestaltet in Form eines Kegelsitzes des Druckbegrenzungsventils, der Fluiddruck am Fluideinlaß des Proportional-Drosselventils wirkt. Dabei wird der Fluiddruck vom Fluideinlaß über eine radial versetzte Axialbohrung in dem Ventilkolben auf die Rückseite des Ventilkolbens über eine Blendenbohrung und eine axial in dem Ventilkolben verlaufende Bohrung sowie über eine von dieser abführenden Radialbohrung an eine Vorsteuerkammer des Ventils gelegt. Ein Druckausgleich des Ventilkolbens ist dadurch bewirkt. Dieser Fluiddruck wirkt gleichzeitig auch auf den Ventilsitz des Druckbegrenzungsventils ein und übersteigt der Druck den an einer Ventilfeder des Druckbegrenzungsventils fest eingestellten Wert, so wird ein Steuerkanal zum Fluidauslaß freigegeben. Der sich nun einstellende Vorsteuer-Volumenstrom vom Fluideinlaß über die seitliche Axialbohrung in dem Ventilkolben, die Rückseite des Ventilkolbens sowie die Blende mit angeschlossener Axialbohrung zu dem Ventilsitz des Druckbegrenzungsventils verursacht an der Blende einen Druckabfall. Dieser reduzierte Fluiddruck wird in die Vorsteuerkammer gemeldet, woraus eine resultierende Kraft entgegen der Hauptfeder des Ventilkolbens resultiert und den Ventilkolben in Richtung auf eine "Öffnen-Position" zwischen dem Fluideinlaß und dem Fluidauslaß bewegt.

Dieser Wirkmechanismus ist grundsätzlich sowohl im unbestromten als auch im bestromten Zustand des Proportional-Drosselventils möglich, so dass eine ständig verfügbare Druckbegrenzungssituation in dem Proportional-Drosselventil integriert ist.

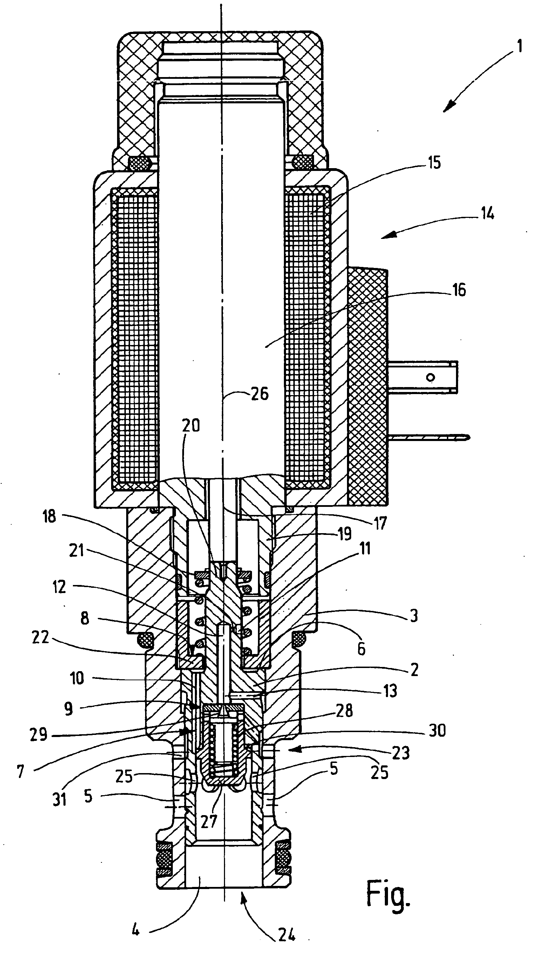

Nachstehend ist die Erfindung anhand der Zeichnung im einzelnen erläutert. Es zeigt die einzige Figur in prinzipieller und nicht maßstäblicher Darstellung einen Längsschnitt durch ein erfindungsgemäßes Proportional-Drosselventil.

In der genannten Figur ist in einem Längsschnitt ein von seiner grundsätzlichen Auslegung her direkt gesteuertes Proportional-Drosselventil 1 dargestellt. In einem Magnetsystem-Gehäuse ist ein Magnetsystem 14 vorgesehen, wobei mittels einer Gleichstromspule 15 ein Magnetanker 16 ansteuerbar ist. Das Magnetsystem 14 ist als drückendes, weggesteuertes Proportional-Magnetsystem ausgebildet, wobei im bestromten Zustand der Gleichstromspule 15 der Magnetanker 16 und ein mit diesem wirkverbundenes Betätigungsglied 17 nach unten in Richtung eines Fluideinlasses 4 bewegt wird.

Das Betätigungsglied 17 ist mit einem eine Blendenfunktion darstellenden Ventilkolben 2 wirkverbunden. Im unbestromten Zustand der Gleichstromspule 15 wird der nicht näher dargestellte Magnetanker 16, das Betätigungsglied 17 und der Ventilkolben 2 durch eine Feder 18 in Richtung eines Hubanschlages 6 gefahren. Das entspricht dem Schließzustand des Proportional-Drosselventils und dem Schließzustand zwischen Fluideinlaß 4 und Fluidauslaß 5. Der Magnetanker 16 ist innenliegend in dem Polrohr angeordnet.

Das Magnetsystem-Gehäuse ist mit einer zylindrischen Führung 19 in ein Ventilgehäuse 3 ragend ausgebildet und insoweit gegenüber der Umgebung abgedichtet. Das zylindrische Betätigungsglied 17 ragt ebenso in die zylindrische Führung 19 und ist darin formschlüssig lösbar mit einem, die Feder 18 dornseitig führenden Fortsatz 20 des Ventilkolbens 2 verbunden. Der Fortsatz 20 geht nach einem Durchtritt durch ein zylindrisches Distanzstück mit einem, den Hubanschlag 6 definierenden Boden 22 in den als "Blendenkolben" ausgebildeten Ventilkolben 2 über. Der Hubanschlag 6 trennt insoweit die Rückseite 8 des Ventilkolbens 2 von seinem Hauptsteuerabschnitt 23.

Der Ventilkolben 2 weist den Hauptsteuerabschnitt 23 für die Ansteuerung der Durchflußrate vom Fluideinlaß 4 zum Fluidauslaß 5 auf. Zu diesem Zweck weist der Hauptsteuerabschnitt 23 eine Einlaßöffnung 24 und radiale Auslaßöffnungen 25 auf. Die Auslaßöffnungen 25 können beim Verfahren des Ventilkolbens 2 in Richtung Fluideinlaß 4 teilweise oder ganz mit dem Fluidauslaß 5 am Ventilgehäuse 3 zur Deckung gebracht werden in Abhängigkeit von der Stellbewegung des Magnetankers 16 des Magnetsystems 14.

Um eine Druckbegrenzungsfunktion mit der Volumenstrom-Regelfunktion des Proportional-Drosselventils 1 überlagern zu können, weist der Hauptsteuerabschnitt 23 des Ventilkolbens 2 eine zu seiner Längsachse 26 konzentrische Innenbohrung auf, in die ein Druckbegrenzungsventil 7 eingesetzt ist. Das Druckbegrenzungsventil 7 weist ein zylinderförmiges Gehäuse 27 auf, in dem mittels einer Druckfeder 28 ein Ventilkegel 29 auf einen Ventilsitz 9 unter Vorspannung angelegt ist. Das Gehäuse 27 des Druckbegrenzungsventils 7 ist fest mit dem hülsenförmigen Hauptsteuerabschnitt 23 des Ventilkolbens 2 verbunden und mit diesem längsverschiebbar geführt. Der Hauptsteuerabschnitt 23 kommuniziert derart im Rahmen des zu führenden Fluids mit verschiedenen Steuerbohrungen zur Ansteuerung, insbesondere betreffend den Fluiddruck auf der Rückseite 8 des Ventilkolbens 2.

Grundsätzlich bewirkt ein über eine Druckfeder 28 einstellbarer Grenzdruck am Fluideinlaß 4 eine Ansteuerung des Ventilkolbens 2 im Sinne einer Verschiebebewegung des Ventilkolbens 2 in Richtung auf den Fluideinlaß 4 zu und ermöglicht einem Volumenstrom das Passieren des Proportional-Drosselventils 1.

Der Druck am Fluideinlaß 4 selbst wird über eine im Hauptsteuerabschnitt 23 radial versetzte Axialbohrung 10 auf die Rückseite 8 in den dortigen Federraum übertragen, und die Axialbohrung 10 mündet im Bereich des Hubanschlages 6 aus dem Ventilkolben 2 aus. Von dem Federraum aus pflanzt sich der Druck über eine Blendenbohrung 11 in dem Fortsatz über eine in diesem Fortsatz 20 geführte Bohrung 12 fort, die von dem Ventilkegel 29 des Druckbegrenzungsventils 7 verschlossen ist. Mit geringem, axialen Abstand von dem Ventilkegel zweigt eine Radialbohrung 13 von der Bohrung 12 ab und führt in eine nicht näher dargestellte Vorsteuerkammer, wodurch der Hauptkolben oder Ventilkolben 2 druckausgeglichen ist.

Übersteigt nun der Druck am Fluideinlaß 4 einen vorgebbaren Wert, so öffnet der Ventilkegel 29 den Ventilsitz 9 des Druckbegrenzungsventils 7. Fluid kann so über einen schräg radial geführten Stichkanal 30 durch das Gehäuse 27 des Druckbegrenzungsventils 7 und die Wand des Hauptsteuerabschnittes 23 zu einem Sekundär-Anschluß 31, der mit einem Druckmittelbehälter in Verbindung ist, strömen. An der Blende 21 der Blendenbohrung 11 auf der Kolbenrückseite in dem Federraum entsteht dadurch ein Druckabfall, der sich zu der Vorsteuerkammer fortpflanzt. Dies hat zur Wirkung, dass sich der Ventilkolben 2 in Richtung Fluideinlaß 4 bewegt und eine Strömungsverbindung zum Fluidauslaß 5 ermöglicht.

Das beschriebene Kombinations-Ventil kann durch die Integration der Druckbegrenzungsfunktion in das Proportional-Drosselventil das im Stand der Technik aufgezeigte eigenständige Druckbegrenzungsventil zur Systemdruckabsicherung ersetzen, wodurch insoweit vollumfänglich auf ein kostenintensives Ventil verzichtet werden kann. Zusätzlich ist es möglich, durch eine vereinfachte "Verbohrung" im Steuerblock (Verzicht auf einen Ventil-Einbauraum sowie verschiedene Verbindungsbohrungen) eine Kostenreduzierung zu erreichen und spart vor Ort Bauraum ein. Insbesondere für Anwendungsfälle, bei denen eine je nach Betriebszustand der Hubeinrichtung variable Druckbegrenzung erwünscht ist und diese auf elektronischem Weg realisiert ist, eignet sich das erfindungsgemäße Ventil zur Realisierung einer zusätzlichen mechanischen Absicherung aus Sicherheitsgründen für den Fall eines Fehlers des elektrischen Regelkreises. Bei der elektronischen Druckbegrenzungsfunktion wird der Druck über Drucksensoren erfaßt und von einer Regelelektronik ausgewertet, die bei einer Drucküberschreitung das Proportional-Ventil elektrisch ansteuert und sich somit der Öffnungsquerschnitt derart einstellt, dass der Druck am Fluideinlaß 4 entsprechend der Soll-Vorgabe konstant gehalten wird. Dies ist aufgrund sicherheitsrelevanter Aspekte kritisch und sollte zum Schutz der Systemkomponenten zusätzlich mechanisch abgesichert sein, wozu auch hier noch ein konventionelles Druckbegrenzungsventil (nicht dargestellt) nötig wäre, auf das im Rahmen der erfindungsgemäßen Lösung nunmehr verzichtet werden kann.

## Patentansprüche

1. Proportional-Drosselventil mit einem Ventilkolben (2), der in einem Ventilgehäuse (3) mit einem Fluideinlaß (4) und einem Fluidauslaß (5) in Längsrichtung verschiebbar geführt ist und der durch einen Energiespeicher, insbesondere in Form einer Druckfeder, gegen einen die Schließposition definierenden Hubanschlag (6) vorgespannt ist, wobei in dem Proportional-Drosselventil (1) ein Druckbegrenzungsventil (7) integriert ist, mit Hilfe dessen der Fluiddruck auf der Rückseite (8) des Ventilkolbens (2) im Sinne eines gegen die Vorspannung erfolgenden Entfernens vom Hubanschlag (6) bei Überschreiten eines vorgebbaren Druckes am Fluideinlaß (4) beeinflußt ist, wobei auf einen Ventilsitz (9) des Druckbegrenzungsventils (7) ein Fluiddruck am Fluideinlaß (4) des Proportional-Drosselventils (1) wirkt, **dadurch gekennzeichnet, dass** der Fluiddruck am Fluideinlaß (4) über eine radial versetzte Axialbohrung (10) in dem Ventilkolben (2) auf die Rückseite (8) des Ventilkolbens (2) über eine Blende (21) und eine axial in dem Ventilkolben (2) verlaufende Bohrung (12) und von dieser abführenden Radialbohrung (13) an eine Vorsteuerkammer zum Druckausgleich des Ventilkolbens (2) weiter geleitet ist.

2. Proportional-Drosselventil nach Anspruch 1, **dadurch gekennzeichnet, dass** das Druckbegrenzungsventil (7) in dem Ventilkolben (2) integriert ist.

3. Proportional-Drosselventil nach Anspruch 1 oder 2, **dadurch gekennzeichnet, dass** der Fluiddruck am Fluideinlaß (4) gleichfalls am Ventilsitz (9) des Druckbegrenzungsventils (7) anliegt und bei Überschreiten eines vorgebbaren Werts dieses öffnet, wobei ein Druckabfall an der Blende (21) bewirkt ist und dadurch eine resultierende Kraft auf den Ventilkolben (2) im Sinne einer Verschiebung desselben zur Verbindung des Fluideinlasses (4) mit dem Fluidauslaß (5) entsteht.

4. Proportional-Drosselventil nach einem der Ansprüche 1 bis 3, **dadurch gekennzeichnet, dass** das Druckbegrenzungsventil (7) über den Ventilkolben (2) auch im unbestromten Zustand eines Betätigungs-Magnetsystems (14) für den Ventilkolben (2) seine Funktion beibehält.

## Claims

1. A proportional throttle valve comprising a valve piston (2) which is moveably guided in the longitudinal direction in a valve housing (3) having a fluid inlet (4) and a fluid outlet (5) and which is pretensioned by an energy accumulator, in particular in the form of a compression spring, against a stroke stop (6) defining the closed position, the proportional throttle valve (1) integrating a pressure limiting valve (7) with the aid of which the fluid pressure on the rear side (8) of the valve piston (2), for purposes of moving away from the stroke stop (6) which takes place against the pretensioning, is influenced when a definable pressure is exceeded at the fluid inlet (4), a fluid pressure at the fluid inlet (4) of the proportional throttle valve (1) acting on a valve set (9) of the pressure limiting valve (7), **characterised in that** the fluid pressure on the fluid inlet (4) is further routed via a radially offset axial bore (10) in the valve piston (2) to the rear side (8) of the valve piston (2) via an orifice (21) and a bore (12) running axially in the valve piston (2) and from this draining radial bore (13) to a pilot chamber for pressure equalisation of the valve piston (2).

2. The proportional throttle valve according to Claim 1, **characterised in that** the pressure limiting valve (7) is integrated into the valve piston (2).

3. The proportional throttle valve according to Claim 1 or 2, **characterised in that** the fluid pressure at the fluid inlet (4) likewise prevails on the valve seat (9) of the pressure limiting valve (7) and, when a definable value is exceeded, opens it, a pressure drop at the orifice (21) being brought about, and thus a resulting force on the valve piston (2) arising for purposes of displacing the latter for connection of the fluid inlet (4) to the fluid outlet (5).

4. The proportional throttle valve according to any of Claims 1 to 3, **characterised in that** the pressure limiting valve (7) maintains its function via the valve piston (2) even in the deenergised state of an actuating magnet system (14) for the valve piston (2).

## Revendications

1. Vanne d'étranglement proportionnelle, comprenant un piston (2) de vanne, qui est guidé coulissant dans une direction longitudinale dans un corps (3) de vanne ayant une entrée (4) pour du fluide et une sortie (5) pour du fluide et qui est précontraint par un accumulateur d'énergie, notamment sous la forme d'un ressort de compression, contre une butée (6) de course définissant la position de fermeture, dans laquelle il est intégré dans la vanne (1) d'étranglement proportionnelle une vanne (7) de limitation de la pression, à l'aide de laquelle la pression du fluide sur la face (8) arrière du piston (2) de vanne est, lorsqu'une pression pouvant être prescrite est dépassée à l'entrée (4) pour du fluide, influencée dans le sens d'un éloignement de la butée (6) de course effectuant la précontrainte, une pression du fluide à l'entrée (4) pour du fluide de la vanne (1) d'étranglement proportionnelle agissant sur un siège (9) de la vanne (7) de limitation de la pression, **caractérisée en ce que** la pression du fluide à l'entrée (4) pour du fluide est acheminée à une chambre de précommande pour la compensation de la pression du piston (2) de vanne, par un trou (10) axial décalé radialement dans le piston (2) de vanne sur la face (8) arrière du piston (2) de vanne par un diaphragme (21) et par un trou (10) s'étendant axialement dans le piston (2) de vanne et par un trou (13) radial partant de celui-ci.

2. Vanne d'étranglement proportionnelle suivant la revendication 1, **caractérisée en ce que** la vanne (7) de limitation de la pression est intégrée dans le piston (2) de vanne.

3. Vanne d'étranglement proportionnelle suivant la revendication 1 ou 2, **caractérisée en ce que** la pression du fluide à l'entrée (4) pour du fluide s'applique également au siège (9) de la vanne (7) de limitation de la pression et, si une valeur pouvant être prescrite est dépassée, ouvre celle-ci, une chute de pression au diaphragme (21) étant provoquée et ainsi une force résistante se créant sur le piston (2) de vanne dans le sens d'un coulissement de celui-ci pour faire communiquer l'entrée (4) pour du fluide avec la sortie (5) pour du fluide.

4. Vanne d'étranglement proportionnelle suivant l'une des revendications 1 à 3, **caractérisée en ce que** la vanne (7) de limitation de la pression conserve sa fonction par le piston (2) de vanne, même dans l'état non parcouru par un courant électrique d'un système (14) magnétique d'actionnement du piston (2) de vanne.
